# DEMANDE DE BREVET EUROPEEN

(11) **EP 4 840 574 A1**
(43) Date de publication de la demande: **18.11.2026**
(21) Numéro de dépôt: 26173094.9
(22) Date de dépôt: 17.04.2026
(51) Int. Cl.: B23K 20/12, B23K 101/12

(54) **RÉSERVOIR COMPRENANT AU MOINS UNE LIGNE DE SOUDURE OBTENUE PAR SOUDAGE PAR FRICTION ET AU MOINS UN TUBE DE PASSAGE POUR UN SUPPORT SUIVEUR, PROCÉDÉ D ASSEMBLAGE D'UN TEL RÉSERVOIR**

(30) Priorité: 14.05.2025 FR 2505118
(71) Demandeur: Airbus Operations S.A.S., 31060 Toulouse (FR)
(72) Inventeur: D'HULSTER, Paul, 31060 TOULOUSE (FR)
(74) Mandataire: Airbus-OPS SAS

(57) **Abrégé**

L'invention a pour objet un réservoir comprenant une ligne de soudure périphérique (50) obtenue par soudage par friction reliant un corps cylindrique (42) et une paroi d'extrémité (46) ainsi qu'au moins un tube de passage (52) qui s'étend entre une première extrémité (52.1) débouchant dans le réservoir (40) et une deuxième extrémité (52.2), les faces intérieures du réservoir et du tube de passage (52) comprenant au moins une ligne de cheminement (L) pour une tête de soudage (60), qui s'étend de manière continue sans points de singularité ou anguleux, entre la deuxième extrémité (52.2) du tube de passage (52) et la ligne de soudure périphérique (50), le tube de passage (52) présentant une section de passage configurée pour permettre à un support suiveur (62) accouplé à la tête de soudage (60) de passer dans le tube de passage (52).

L'invention a également pour objet un procédé d'assemblage d'un tel réservoir.

## Description

La présente demande se rapporte à un réservoir comprenant au moins une ligne de soudure obtenue par soudage par friction et au moins un tube de passage pour un support suiveur ainsi qu'à un procédé d'assemblage d'un tel réservoir.

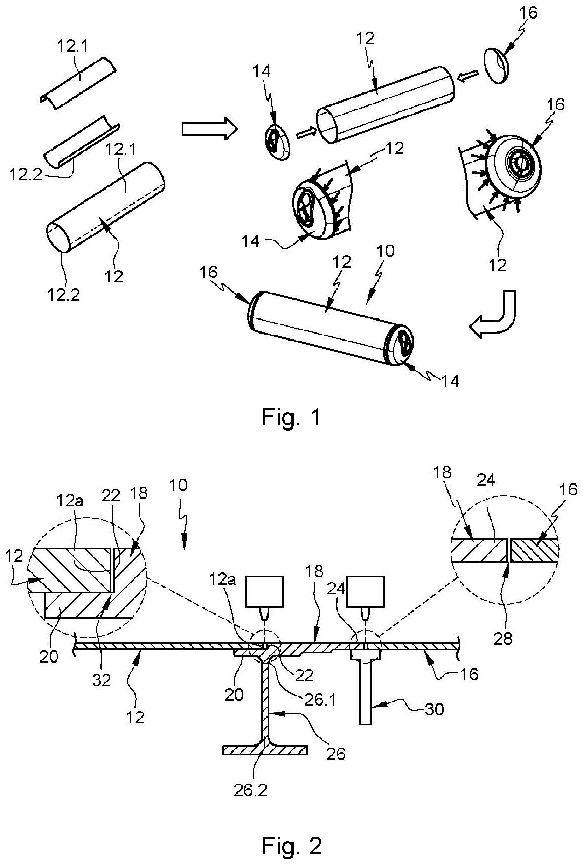

Selon un mode de réalisation visible sur la figure 1, un réservoir 10 comprend un corps tubulaire 12 ainsi que des premier et deuxième dômes 14, 16 reliés par soudage aux extrémités du corps tubulaire 12. Selon une configuration, le corps tubulaire 12 comprend deux demi-cylindres 12.1, 12.2 reliés par soudage.

Un procédé de soudage par friction est préféré par rapport aux autres procédés de soudage car il offre de meilleures caractéristiques mécaniques, une plus grande stabilité et une vitesse de réalisation plus élevée.

Ce procédé de soudage utilise une tête de soudage rotative appliquée contre les premières faces des pièces à assembler et déplacée le long de la zone de jonction desdites pièces, une contre-plaque étant positionnée contre les deuxièmes faces (opposées aux premières faces) des pièces à assembler pour assurer la reprise des efforts générés par la tête de soudage.

Les demi-cylindres 12.1, 12.2 du corps tubulaire 12 et le premier dôme 14 peuvent être assemblés en utilisant un procédé de soudage par friction. Selon l'art antérieur, le deuxième dôme 16 n'est pas assemblé par un procédé de soudage par friction car il n'est pas possible de positionner une contre-plaque à l'intérieur du réservoir pour reprendre les efforts générés par la tête de soudage, cette contre-plaque ne pouvant pas être retirée du réservoir fermé à l'issue de l'opération de soudage.

Selon un mode de réalisation visible sur la figure 2 et décrit dans le document FR3129861, un réservoir 10 comprend une couronne de jonction 18 reliant une première extrémité 12a du corps tubulaire 12 et le deuxième dôme 16. Cette couronne de jonction 18 comprend :
- un premier tronçon cylindrique 20 emmanché dans la première extrémité 12a du corps tubulaire 12,
- au moins un épaulement 22 attenant au premier tronçon cylindrique 20 et en saillie vers la zone extérieure du réservoir 10 par rapport à ce dernier,
- un deuxième tronçon cylindrique 24 abouté au chant du deuxième dôme 16,
- au moins une âme transversale 26 en forme d'anneau comportant un bord extérieur 26.1 relié au premier tronçon cylindrique 20 et un bord intérieur 26.2 orienté vers la zone intérieure du réservoir 10, ladite âme transversale 26 étant positionnée approximativement dans un même plan transversal que l'épaulement 22 et permettant de rigidifier ladite couronne de jonction 18.

Lors d'une première étape de soudage par friction, la couronne de jonction 18 est reliée au deuxième dôme 16 par une première soudure périphérique 28. Lors de cette première étape de soudage par friction, une contre-plaque 30 est plaquée contre les faces intérieures de la couronne de jonction 18 et du deuxième dôme 16.

Après le retrait de la contre-plaque 30, le premier tronçon cylindrique 20 de la couronne de jonction 18 est emmanché dans la première extrémité 12a du corps tubulaire 12 puis, lors d'une deuxième étape de soudage par friction, la couronne de jonction 18 est reliée au corps tubulaire 12 par une deuxième soudure périphérique 32 positionnée au niveau d'un plan de jonction situé entre le premier épaulement 22 et la première extrémité 12a du corps tubulaire 12. Lors de cette deuxième étape de soudage par friction, l'âme transversale 26 de la couronne de jonction 18 assure la fonction de contre-plaque.

Même si cette solution permet d'obtenir un réservoir en assemblant différentes parties uniquement par soudage par friction, elle n'est pas pleinement satisfaisante car elle conduit à augmenter la masse du réservoir ainsi que le temps et les coûts de fabrication de ce dernier en raison de la présence de la couronne de jonction 18 et des première et deuxième soudures périphériques 28, 32.

La présente invention vise à remédier à tout ou partie des inconvénients de l'art antérieur.

A cet effet, l'invention a pour objet un réservoir comprenant un corps cylindrique, au moins une paroi d'extrémité ainsi qu'au moins une ligne de soudure périphérique reliant le corps cylindrique et la paroi d'extrémité, le réservoir séparant des zones intérieure et extérieure et présentant une face intérieure.

Selon l'invention, le réservoir comprend au moins un tube de passage qui s'étend entre une première extrémité débouchant dans le réservoir et une deuxième extrémité, ledit tube de passage étant configuré pour faire communiquer les zones extérieure et intérieure du réservoir et présentant une face intérieure, les faces intérieures du réservoir et du tube de passage comprenant au moins une ligne de cheminement pour une tête de soudage, qui s'étend de manière continue, sans point de singularité ou anguleux, entre la deuxième extrémité du tube de passage et la ligne de soudure périphérique, le tube de passage présentant une section de passage configurée pour permettre à un support suiveur de passer dans le tube de passage.

Cette solution permet de fermer le réservoir en réalisant une ligne de soudure périphérique par soudage par friction, sans ajout d'une couronne de jonction, en reliant directement le corps cylindrique et la paroi d'extrémité.

Selon une autre caractéristique, au moins au niveau de la ligne de cheminement, le réservoir et le tube de passage présentent une épaisseur sensiblement constante.

Selon une autre caractéristique, le tube de passage est solidaire de la deuxième paroi d'extrémité.

Selon une autre caractéristique, le réservoir présente un axe de réservoir. En complément, le tube de passage présente un axe de tube parallèle à l'axe de réservoir.

Selon une autre caractéristique, le tube de passage est solidaire du corps cylindrique.

Selon une autre caractéristique, le tube de passage présente un axe de tube positionné dans un plan transversal perpendiculaire à l'axe de réservoir.

Selon une autre caractéristique, le tube de passage est rectiligne et sa face intérieure présente au moins une ligne tangente à la face intérieure du réservoir, ladite ligne formant la ligne de cheminement.

Selon une autre caractéristique, le tube de passage comprend un tronçon débouchant qui présente une face intérieure ainsi qu'un tronçon de raccordement courbe qui relie le tronçon débouchant et le réservoir, ledit tronçon de raccordement présentant une face intérieure qui comprend au moins une ligne tangente en un premier point à la face intérieure du tronçon débouchant et en un deuxième point à la face intérieure du réservoir, ladite ligne formant la ligne de cheminement.

L'invention a également pour objet un procédé d'assemblage d'un réservoir selon l'une des caractéristiques précédentes qui comprend :
- une étape de positionnement d'une tête de soudage et d'un support suiveur au niveau de la deuxième extrémité du tube de passage,
- une étape de déplacement de la tête de soudage le long de la ligne de cheminement jusqu'à atteindre la ligne de soudure périphérique, le support suiveur, positionné dans le tube de passage, suivant la tête de soudage,
- une étape de soudage par friction en déplaçant autour du réservoir la tête de soudage et le support suiveur positionnés en vis-à-vis de manière à réaliser la ligne de soudure périphérique,
- une étape de déplacement de la tête de soudage le long de la ligne de cheminement jusqu'à atteindre la deuxième extrémité du tube de passage, le support suiveur, positionné dans le tube de passage, suivant la tête de soudage.

Selon une autre caractéristique, le procédé d'assemblage comprend au moins une étape de mise en place d'un embout de raccordement au niveau de la deuxième extrémité du tube de passage.

D'autres caractéristiques et avantages ressortiront de la description de l'invention qui va suivre, description donnée à titre d'exemple uniquement, en regard des dessins annexés parmi lesquels :
- La figure 1 est une représentation schématique des différentes étapes de fabrication d'un réservoir illustrant un mode de réalisation de l'art antérieur,
- La figure 2 est une coupe d'une partie d'un réservoir illustrant un autre mode de réalisation de l'art antérieur,
- La figure 3 est une vue en perspective d'un réservoir illustrant un mode de réalisation de l'invention,
- La figure 4 est une vue en perspective d'une partie d'un réservoir avec un arrachement d'une partie d'une paroi d'extrémité, lors d'une opération de soudage, illustrant un mode de réalisation de l'invention,
- La figure 5 est une vue de face d'une partie du réservoir visible sur la figure 4 avec un arrachement d'une partie de la paroi d'extrémité lors de l'opération de soudage,
- La figure 6 est une vue en perspective d'une partie d'un réservoir lors d'une opération de soudage illustrant un autre mode de réalisation de l'invention,
- La figure 7 est une vue en perspective d'une partie d'un réservoir lors d'une opération de soudage illustrant un autre mode de réalisation de l'invention,
- La figure 8 est une représentation schématique des différentes phases d'un procédé de soudage par friction illustrant un mode de réalisation de l'invention.

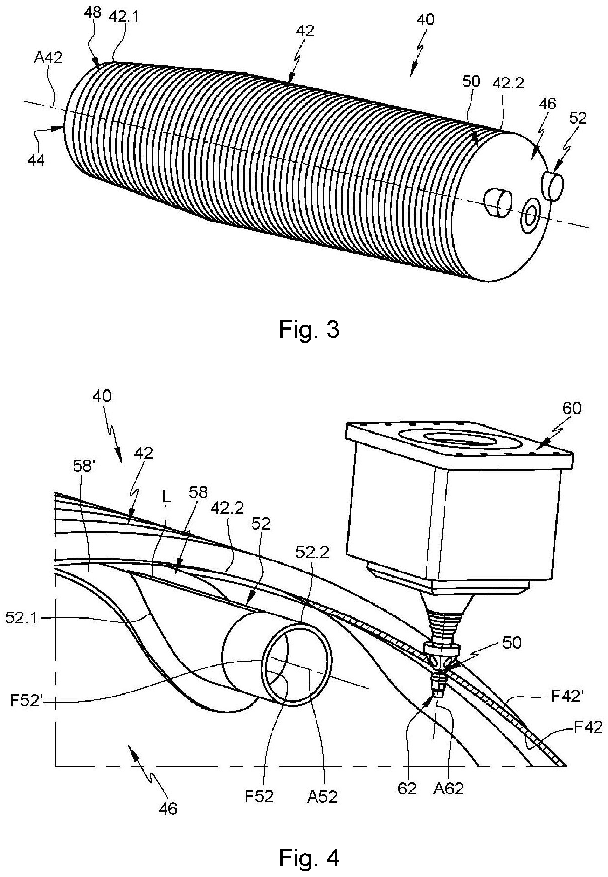

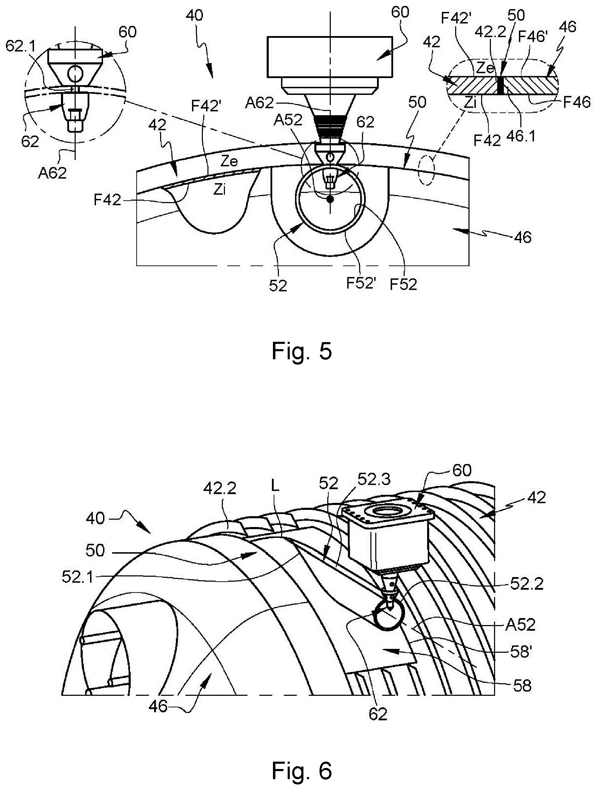

Selon un mode de réalisation visible sur la figure 3, un réservoir 40 cylindrique comprend un corps tubulaire 42 cylindrique qui s'étend entre des première et deuxième extrémités 42.1, 42.2, une première paroi d'extrémité 44 reliée de manière étanche à la première extrémité 42.1 ainsi qu'une deuxième paroi d'extrémité 46 reliée de manière étanche à la deuxième extrémité 42.2. Lorsqu'il est fermé, le réservoir délimite une zone intérieure Zi et une zone extérieure Ze visibles sur les figures 4 et 5. Le corps tubulaire 42 présente une face intérieure F42 orientée vers la zone intérieure Zi et une face extérieure F42' orientée vers la zone extérieure Ze.

Le corps tubulaire 42 présente un axe de réservoir A42. Pour la suite de la description, une direction longitudinale est parallèle à l'axe de réservoir A42. Un plan transversal est un plan perpendiculaire à l'axe de réservoir A42.

Selon une configuration, le corps tubulaire 42 comprend deux demi-cylindres reliés entre eux de manière étanche pour obtenir le corps tubulaire 42. Selon un mode opératoire, les deux demi-cylindres sont reliés par soudage par friction.

Selon un agencement, les première et deuxième parois d'extrémité 44, 46 présentent chacune une forme en dôme. Bien entendu, l'invention n'est pas limitée à cette géométrie pour les première et deuxième parois d'extrémité 44, 46. Quel que soit le mode de réalisation, chacune des première et deuxième parois d'extrémité 44, 46 présente une extrémité qui comprend un chant 46.1 circulaire, positionné dans un plan transversal, ainsi que des faces intérieure et extérieure F46, F46'. Les faces intérieures F42, F46 du corps tubulaire 42 ainsi que des première et deuxième parois d'extrémité 44, 46 forment la face intérieure du réservoir 40. Les faces extérieures F42', F46' du corps tubulaire 42 ainsi que des première et deuxième parois d'extrémité 44, 46 forment la face extérieure du réservoir 40.

Selon un mode de réalisation, les première et deuxième parois d'extrémité 44, 46 sont reliées au corps tubulaire 42 respectivement par des première et deuxième lignes de soudure périphériques 48, 50. De part et d'autre de la première ou deuxième ligne de soudure périphérique 48, 50, le corps tubulaire et la première ou deuxième paroi d'extrémité 42, 44, 46 ont sensiblement la même épaisseur.

Un procédé de fabrication d'un réservoir 40 comprend au moins une étape de réalisation du corps tubulaire 42 ainsi que des première et deuxième parois d'extrémité 44, 46, une première étape de soudage pour réaliser la première ligne de soudure périphériques 48 reliant le corps tubulaire 42 et la première paroi d'extrémité 44 puis une deuxième étape de soudage pour réaliser la deuxième ligne de soudure périphérique 50 reliant le corps tubulaire 42 et la deuxième paroi d'extrémité 46.

Selon un mode opératoire, la première étape de soudage est une étape de soudage par friction en utilisant une contre-plaque positionnée contre les faces intérieures F42 du corps tubulaire 42 et de la première paroi d'extrémité 44, une tête de soudage étant déplacée dans la zone extérieure Ze contre les faces extérieures F42' du corps tubulaire 42 et de la première paroi d'extrémité 44. Cette première étape de soudage n'est pas plus décrite car elle peut être identique à celle des procédés de l'art antérieur.

Selon une particularité de l'invention, le réservoir 40 comprend au moins un tube de passage 52 qui s'étend entre une première extrémité 52.1 débouchant dans le réservoir 40 et une deuxième extrémité 52.2, ledit tube de passage étant configuré pour faire communiquer les zones extérieure et intérieure Ze, Zi du réservoir 40.

Selon un mode de réalisation, le tube de passage 52 est cylindrique et comprend des faces intérieure et extérieure F52, F52' sensiblement cylindriques et concentriques. Bien entendu, l'invention n'est pas limitée à cette géométrie pour le tube de passage 52. Ce dernier pourrait comprendre au moins une zone plane. Quel que soit le mode de réalisation, le tube de passage 52 comprend au moins une face intérieure F52 et au moins une face extérieure F52'.

Selon une configuration, le tube de passage 52 comprend une épaisseur qui correspond à la distance séparant les faces intérieure et extérieure F52, F52' sensiblement égale à l'épaisseur du corps tubulaire 42 et de la deuxième paroi d'extrémité 46 au niveau de la deuxième ligne de soudure périphérique 50.

Le tube de passage 52 présente un axe de tube A52 sensiblement parallèle et coaxial aux faces intérieure et extérieure F52, F52'.

Selon un premier mode de réalisation visible sur les figures 4, 5 et 8, le tube de passage 52 est solidaire de la deuxième paroi d'extrémité 46 et présente un axe de tube A52 parallèle à la direction longitudinale ou à l'axe de réservoir A42.

Selon ce premier mode de réalisation, le tube de passage 52 est positionné par rapport à la deuxième paroi d'extrémité 46 de telle manière qu'il présente, au niveau de sa face intérieure F52, au moins une ligne tangente à la face intérieure F46 de la deuxième paroi d'extrémité 46.

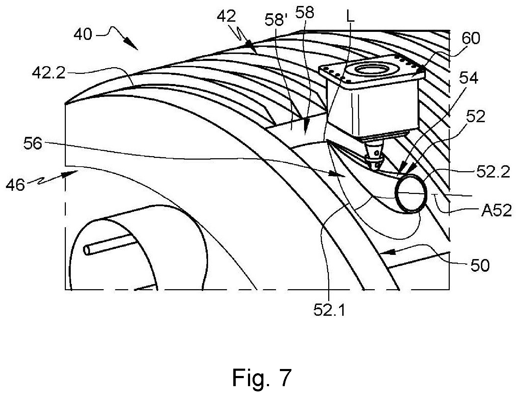

Selon un deuxième mode de réalisation visible sur les figures 6 et 7, le tube de passage 52 est solidaire du corps tubulaire 42 et présente un axe de tube A52 positionné dans un plan transversal perpendiculaire à l'axe de réservoir A42.

Selon une configuration visible sur la figure 6, le tube de passage 52 est positionné par rapport au corps tubulaire 42 de telle manière qu'il présente, au niveau de sa face intérieure F52, au moins une ligne tangente à la face intérieure F42 du corps tubulaire 42.

Selon une autre configuration, le tube de passage 52 comprend un tronçon débouchant 54 rectiligne et de section constante qui présente des première faces intérieure et extérieure cylindriques et coaxiales entre elles et à l'axe de tube A52 ainsi qu'un tronçon de raccordement 56 évasé reliant le tronçon débouchant 54 et le corps tubulaire 42, le tronçon de raccordement 56 présentant une face intérieure continue avec la face intérieure du tronçon débouchant 54 et la face intérieure F42 du corps tubulaire 42. Selon cette configuration, le tronçon de raccordement 56 présente, au niveau de sa face intérieure, au moins une ligne tangente en un premier point à la face intérieure F42 du corps tubulaire 42 et en un second point à la face intérieure du tronçon débouchant 54.

Cette configuration n'est pas limitée à un tube de passage 52 relié au corps tubulaire 42. Selon une autre configuration, le tube de passage 52 est relié à la deuxième paroi d'extrémité 46 et comprend un tronçon débouchant 54 rectiligne et de section constante qui présente des premières faces intérieure et extérieure cylindriques et coaxiales entre elles et à l'axe de tube A52 ainsi qu'un tronçon de raccordement 56 courbe reliant le tronçon débouchant 54 et la deuxième paroi d'extrémité 46, le tronçon de raccordement 56 présentant une face intérieure continue avec la face intérieure du tronçon débouchant 54 et avec la face intérieure F46 de la paroi d'extrémité 46. Selon cette configuration, le tronçon de raccordement 56 présente, au niveau de sa face intérieure, une ligne tangente en un premier point à la face intérieure F46 de la deuxième paroi d'extrémité 46 et en un second point à la face intérieure du tronçon débouchant 54.

Selon ces différents modes de réalisation, le tube de passage 52 comprend une première extrémité reliée au réservoir 40 et débouchant dans la zone intérieure Zi de ce dernier ainsi qu'une deuxième extrémité ouverte permettant de faire communiquer les zones intérieure et extérieure Zi, Ze du réservoir 40, le tube de passage 52 présentant une face intérieure F52 reliée à la face intérieure du réservoir 40 par au moins une ligne continue au niveau de laquelle le tube de passage 52 présente une épaisseur sensiblement constante. Cette ligne continue n'intersecte pas une arête et ne présente pas de point de singularité ou anguleux, à savoir un point avec deux tangentes différentes.

Selon des premiers modes de réalisation visibles sur les figures 4 à 6 et 8, le tube de passage 52 est rectiligne et présente, au niveau de sa face intérieure F52, au moins une ligne ou génératrice tangente à la face intérieure du réservoir 40.

Selon un deuxième mode de réalisation visible sur la figure 7, le tube de passage 52 comprend un tronçon débouchant 54 ainsi qu'un tronçon de raccordement 56 courbe, qui relie le tronçon débouchant 54 et le réservoir 40, qui présente, au niveau de sa face intérieure, au moins une ligne tangente en un premier point à la face intérieure du tronçon débouchant 54 et en un deuxième point à la face intérieure du réservoir 40.

Selon un mode opératoire, une pièce 58 comprenant le tube de passage 52 et une partie 58' du corps tubulaire 42 ou de la paroi d'extrémité 46 est réalisée séparément du reste du corps tubulaire 42 ou de la paroi d'extrémité 46, puis reliée au reste du corps tubulaire 42 ou de la paroi d'extrémité 46 par un procédé de soudage par friction en utilisant une contre-plaque. Bien entendu, l'invention n'est pas limitée à ce mode de réalisation pour raccorder le tube de passage 52 au réservoir 40. Ainsi, le corps tubulaire 42 ou la paroi d'extrémité 46 et le tube de passage 52 pourraient être réalisés d'un seul tenant, lors d'une même étape de fabrication et non assemblés ultérieurement.

Selon l'invention, la deuxième étape de soudage permettant de réaliser la deuxième ligne de soudure périphérique 50 qui relie le corps tubulaire 42 et la deuxième paroi d'extrémité 46 est réalisée par soudage par friction. Lors de cette opération de soudage par friction, une tête de soudage 60 est positionnée dans la zone extérieure Ze et se déplace le long de la deuxième ligne de soudure périphérique 50, en contact avec les faces extérieures F42', F46' du corps tubulaire 42 et de la deuxième paroi d'extrémité 46. En complément, un support suiveur 62 est positionné dans la zone intérieure Zi et configuré pour être accouplé à la tête de soudage 60 et la suivre en restant en contact avec les faces intérieures F42, F46 du corps tubulaire 42 et de la deuxième paroi d'extrémité 46.

Selon un mode de réalisation, le support suiveur 62 est relié de manière mécanique à la tête de soudage 60 par une liaison mécanique 62.1 rigide et cylindrique.

Quel que soit le mode de réalisation, le support suiveur 62 présente une géométrie et des dimensions données. A titre indicatif, le support suiveur 62 a une forme approximativement de révolution et présente un axe de support A62.

Selon une particularité, le tube de passage 52 présente une section de passage (délimitée par sa face intérieure F52) configurée pour permettre au support suiveur 62 de passer dans le tube de passage 52 afin de cheminer de la zone extérieure Ze vers la zone intérieure Zi ou inversement.

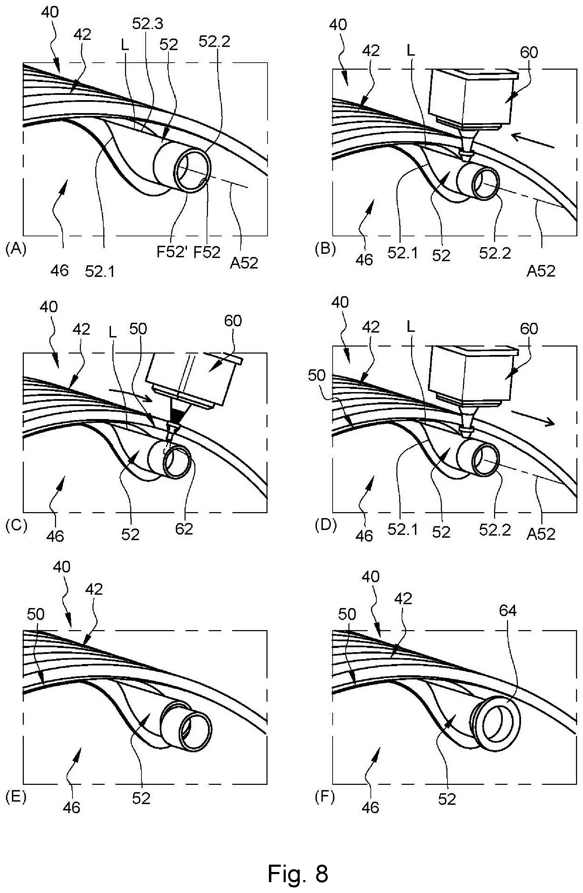

Selon un mode opératoire de la deuxième étape de soudage, lors d'une première phase de positionnement, la tête de soudage 60 est positionnée au niveau de la deuxième extrémité du tube de passage 52, à l'extérieur du tube de passage 52, le support suiveur 62 étant positionné dans le tube de passage 52. Lors d'une deuxième phase de déplacement, la tête de soudage 60 est déplacée jusqu'à atteindre la deuxième ligne de soudure périphérique 50, comme illustré sur la partie (B) de la figure 8. Compte tenu du chemin continu (sans points de singularité ou anguleux) au niveau des faces intérieures du tube de passage 52 et du réservoir 40, le support suiveur 62 peut suivre la tête de soudage 60.

Lors d'une troisième phase de soudage, comme illustré sur la partie (C) de la figure 8, la tête de soudage 60 se déplace sur toute la circonférence du réservoir 40 de manière à réaliser la deuxième ligne de soudure périphérique 50. Lorsque cette dernière phase est terminée, lors d'une quatrième phase de déplacement, la tête de soudage 60 est déplacée le long du tube de passage 52, comme illustré sur la partie (D) de la figure 8, jusqu'à atteindre la deuxième extrémité 52.2 du tube de passage 52. Compte tenu du chemin continu (sans points de singularité ou anguleux) au niveau des faces intérieures du tube de passage 52 et du réservoir 40, le support suiveur 62 peut suivre la tête de soudage 60.

Selon un premier mode de fonctionnement, la tête de soudage 60 est activée et mise en rotation lors de la troisième phase de soudage mais également lors des deuxième et quatrième phases de déplacement le long du tube de passage 62 pour pénétrer dans la matière. Selon un deuxième mode de fonctionnement, la tête de soudage 60 est activée et mise en rotation lors de la troisième phase de soudage et de la quatrième phase de déplacement, le tube de passage comprenant initialement une fente 52.3 pour permettre le passage de la liaison mécanique 62.1 lors de la deuxième phase de déplacement.

Après l'opération de soudage, le tube de passage 52 peut être obturé de manière permanente avec un bouchon. Dans ce cas, le tube de passage 52 n'est utilisé que pour l'introduction et la sortie du support suiveur 62.

Selon un autre mode de réalisation illustré par les parties (E) et (F) de la figure 8, le tube de passage 52 peut être découpé et équipé d'un embout de raccordement 64. Dans ce cas, le tube de passage 52 présente une fonction de raccordement après avoir permis l'introduction et la sortie du support suiveur 62. Selon cet autre mode de réalisation, le procédé d'assemblage comprend au moins une étape de mise en place d'un embout de raccordement 64 au niveau de la deuxième extrémité 52.2 du tube de passage 52.

Bien entendu, l'invention n'est pas limitée aux modes de réalisation précédemment décrits. Quel que soit le mode de réalisation, le réservoir 40 sépare des zones extérieure et intérieure Ze, Zi, présente une face intérieure et comprend un corps cylindrique 42, au moins une paroi d'extrémité 46, au moins une ligne de soudure périphérique 50 reliant le corps cylindrique 42 et la paroi d'extrémité 46 ainsi qu'au moins un tube de passage 52 qui s'étend entre une première extrémité 52.1 débouchant dans le réservoir 40 et une deuxième extrémité 52.2 ; ledit tube de passage 52 étant configuré pour faire communiquer les zones extérieure et intérieure Ze, Zi du réservoir 40 et présentant une face intérieure F52, les faces intérieures du réservoir 40 et du tube de passage 52 comprenant au moins une ligne de cheminement L pour une tête de soudage 60, qui s'étend de manière continue sans points de singularité ou anguleux, entre la deuxième extrémité 52.2 du tube de passage 52 et la ligne de soudure périphérique 50. Selon une configuration, au moins au niveau de cette ligne de cheminement L, le réservoir 40 et le tube de passage 52 présentent une épaisseur sensiblement constante.

Un procédé d'assemblage d'un réservoir 40 comprend :
- une étape de positionnement d'une tête de soudage 60 et d'un support suiveur 62 au niveau de la deuxième extrémité 52.2 du tube de passage 52,
- une étape de déplacement de la tête de soudage 60 le long de la ligne de cheminement L jusqu'à atteindre la ligne de soudure périphérique 50, le support suiveur 62 positionné dans le tube de passage 52 suivant la tête de soudage 60,
- une étape de soudage par friction en déplaçant la tête de soudage 60 et le support suiveur 62 en vis-à-vis sur toute la circonférence du réservoir 40 de manière à réaliser la ligne de soudure périphérique 50,
- une étape de déplacement de la tête de soudage 60 le long de la ligne de cheminement L jusqu'à atteindre la deuxième extrémité 52.2 du tube de passage 52, le support suiveur 62 positionné dans le tube de passage 52 suivant la tête de soudage 60.

Ce procédé d'assemblage permet de réaliser une ligne de soudure périphérique pour fermer le réservoir 40 en utilisant une technique de soudage par friction, et ce sans ajout d'une couronne de jonction.

## Revendications

1. Réservoir comprenant un corps cylindrique (42), au moins une paroi d'extrémité (46) ainsi qu'au moins une ligne de soudure périphérique (50) reliant le corps cylindrique (42) et la paroi d'extrémité (46), le réservoir (40) séparant des zones intérieure et extérieure (Ze, Zi) et présentant une face intérieure ; **caractérisé en ce que** le réservoir comprend au moins un tube de passage (52) qui s'étend entre une première extrémité (52.1) débouchant dans le réservoir (40) et une deuxième extrémité (52.2), ledit tube de passage (52) étant configuré pour faire communiquer les zones extérieure et intérieure (Ze, Zi) du réservoir (40) et présentant une face intérieure (F52), les faces intérieures du réservoir et du tube de passage (52) comprenant au moins une ligne de cheminement (L) pour une tête de soudage (60), qui s'étend de manière continue sans points de singularité ou anguleux, entre la deuxième extrémité (52.2) du tube de passage (52.2) et la ligne de soudure périphérique (50), le tube de passage (52) présentant une section de passage configurée pour permettre à un support suiveur (62) de passer dans le tube de passage (52).

2. Réservoir selon la revendication 1, **caractérisé en ce qu'**au moins au niveau de la ligne de cheminement (L), le réservoir (40) et le tube de passage (52) présentent une épaisseur sensiblement constante.

3. Réservoir selon l'une des revendications précédentes, **caractérisé en ce que** le tube de passage (52) est solidaire de la deuxième paroi d'extrémité (46).

4. Réservoir selon la revendication précédente, **caractérisé en ce que** le réservoir (40) présente un axe de réservoir (A42) et **en ce que** le tube de passage (52) présente un axe de tube (A52) parallèle à l'axe de réservoir (A42).

5. Réservoir selon l'une des revendications 1 à 2, **caractérisé en ce que** le tube de passage (52) est solidaire du corps cylindrique (42).

6. Réservoir selon la revendication précédente, **caractérisé en ce que** le réservoir (40) présente un axe de réservoir (A42) et **en ce que** le tube de passage (52) présente un axe de tube (A52) positionné dans un plan transversal perpendiculaire à l'axe de réservoir (A42).

7. Réservoir selon l'une des revendications précédentes, **caractérisé en ce que** le tube de passage (52) est rectiligne et sa face intérieure (F52) présente au moins une ligne tangente à la face intérieure du réservoir (40), ladite ligne formant la ligne de cheminement (L).

8. Réservoir selon l'une des revendications 1 à 6, **caractérisé en ce que** le tube de passage (52) comprend un tronçon débouchant (54) qui présente une face intérieure ainsi qu'un tronçon de raccordement (56) courbe reliant le tronçon débouchant (54) et le réservoir, ledit tronçon de raccordement (56) présentant une face intérieure qui comprend au moins une ligne tangente en un premier point à la face intérieure du tronçon débouchant (54) et en un deuxième point à la face intérieure du réservoir (40), ladite ligne formant la ligne de cheminement (L).

9. Procédé d'assemblage d'un réservoir selon l'une des revendications 1 à 8, comprenant :
- une étape de positionnement d'une tête de soudage (60) et d'un support suiveur (62) au niveau de la deuxième extrémité (52.2) du tube de passage (52),
- une étape de déplacement de la tête de soudage (60) le long de la ligne de cheminement (L) jusqu'à atteindre la ligne de soudure périphérique (50), le support suiveur (62) positionné dans le tube de passage (52) suivant la tête de soudage (60),
- une étape de soudage par friction en déplaçant autour du réservoir (40) la tête de soudage (60) et le support suiveur (62) positionnés en vis-à-vis de manière à réaliser la ligne de soudure périphérique (50),
- une étape de déplacement de la tête de soudage (60) le long de la ligne de cheminement (L) jusqu'à atteindre la deuxième extrémité (52.2) du tube de passage (52), le support suiveur (62) positionné dans le tube de passage (52) suivant la tête de soudage (60).

10. Procédé d'assemblage selon la revendication précédente, **caractérisé en ce que** le procédé d'assemblage comprend au moins une étape de mise en place d'un embout de raccordement (64) au niveau de la deuxième extrémité (52.2) du tube de passage (52).
